# EUROPÄISCHE PATENTSCHRIFT

(11) **EP 2 454 864 B1**
(45) Veröffentlichungstag und Bekanntmachung des Hinweises auf die Patenterteilung: **03.10.2018**
(21) Anmeldenummer: 10732282.8
(22) Anmeldetag: 18.06.2010
(51) Int. Cl.: H04L 29/06, H04L 1/00

(54) **VERMEIDUNG VON MASKERADE DURCH VERWENDUNG VON KENNUNGSSEQUENZEN**
PREVENTION OF MASQUERADE BY USING IDENTIFICATION SEQUENCES
SUPPRESSION DE MASCARADE À L'AIDE DE SÉQUENCES DE CARACTÉRISTIQUES

(30) Priorität: 14.07.2009 DE 102009033241
(43) Veröffentlichungstag der Anmeldung: 23.05.2012
(73) Patentinhaber: Audi AG, 85045 Ingolstadt (DE); Volkswagen Aktiengesellschaft, 38440 Wolfsburg (DE); TTTech Computertechnik AG, 1040 Wien (AT)
(72) Erfinder: SCHACHTNER, Sven, 85117 Eitensheim (DE); GSTÖTTENBAUER, Bernhard, A-4209 Engerwitzdorf (AT); BIZENBERGER, Thomas, 38116 Braunschweig (DE)
(74) Vertreter: Brandt, Kai
(86) Internationale Anmeldenummer: PCT/EP2010/003698
(87) Internationale Veröffentlichungsnummer: WO 2011/006575

(56) Entgegenhaltungen:
- WO-A2-2009/057941
- US-A1- 2007 192 668

## Beschreibung

Die Erfindung betrifft Verfahren zum Übertragen einer Botschaft zwischen einem Sender und einem Empfänger auf einem Bus mit einer einer Sender/Empfänger-Strecke zur Authentifizierung zugeordneten Kennung und mit einem Botschaftszähler. Die Erfindung betrifft ferner ein Steuergerät und ein Fahrzeug, die eingerichtet sind, das Verfahren zum Übertragen einer Botschaft auszuführen.

Zur Absicherung der Datenkommunikation fordert die Sicherheitsnorm IEC 61508 den Nachweis, dass unerkannte Ausfälle des Kommunikationsprozesses unter Berücksichtigung von unterstellten Fehlerszenarien abgeschätzt werden.

Die Maßnahmen sind dabei auf Ebene der Applikation angesiedelt und schützen die Daten von der sicherheitsgerichteten Daten-Quelle zur Daten-Senke ab (sog. End-to-End Absicherung). Bei der Fehlerbetrachtung muss u.a. auch für das Fehlerszenario Maskerade abgeschätzt werden, welche Wahrscheinlichkeit für einen unerkannten Fehler im Kommunikationsprozess vorliegt.

Das AUDI Kommunikationsmodell sieht ein System basierend auf FlexRay und CAN vor. In dem Kommunikationssystem können parallel mehrere sicherheitsrelevante Kommunikationsstrecken verwendet werden. Neben den aktiven Teilnehmern an einer sicherheitsgerichteten Kommunikation sind auch andere sicherheitsrelevante und nicht-sicherheitsrelevante Kommunikationsstrecken vorhanden. Ein Daten empfangender Teilnehmer einer sicherheitsgerichteten Kommunikation darf nur die empfangenen Daten von dem für ihn relevanten Sender verwenden, ansonsten liegt ein unerkannter Maskerade-Fehler vor.

Der Ausdruck Maskerade sagt, dass eine Botschaft von einem nichtsicheren Teilnehmer fälschlicherweise als eine Botschaft von einem sicheren Teilnehmer identifiziert wird.

Der Empfänger bewertet also im Falle einer Maskerade eine nichtauthentische Botschaft als authentisch. Dabei bedeutet eine authentische Botschaft, dass die Botschaft gültig ist und dessen Information von einem authentifizierten Sender generiert wurde. Maskerade wird üblicherweise durch fehlerhaftes Routing einer korrekten Botschaft verursacht, wobei sowohl Sendesteuergeräte, Gateway aber auch das Empfängersteuergerät zur betrachteten Sicherheitsfunktion das Fehlrouting bewirken können. Fehler, die zu Maskerade führen, lassen sich in die drei Kategorien, zufällige Hardware-Fehler, systematische Software-Fehler und zufällige Bitfehler am Bus einteilen.

Maskerade durch zufällige Hardware-Fehler ist als Anforderung der IEC 61508-2 an die Datenkommunikation zu bewerten. Wenn irgendeine Form von Datenkommunikation bei der Ausführung einer Sicherheitsfunktion verwendet wird, muss die Wahrscheinlichkeit eines unerkannten Ausfalls des Kommunikationsprozesses abgeschätzt werden. Dabei müssen Übertragungsfehler, Wiederholungen, Verlust, Einfügungen, falsche Abfolge, Verfälschung, Verzögerung und Maskerade berücksichtigt werden. Diese Wahrscheinlichkeit muss bei der Abschätzung der Wahrscheinlichkeit des gefahrbringenden Ausfalls der Sicherheitsfunktion infolge zufälliger Hardwareausfälle berücksichtigt werden.

Systematische Software-Fehler, etwa durch nicht korrekte Konfiguration, sind durch den Entwicklungsprozess und Software- bzw. Integrationstests auszuschließen, insbesondere in der sicherheitsgerichteten Software des Senders und des Empfängers mit der End-to-End Absicherung. Eine Berechung einer Auftrittswahrscheinlichkeit ist nicht erforderlich, da diese Fehler determiniert und nicht stochastisch auftreten.

Zufällige Bitfehler am Bus können zu einer fehlerhaften Interpretation der Information in den Nutzdaten führen, etwa bedingt durch eine Verfälschung des Botschaften-Identifiers bei CAN und der empfängerselektiven Botschaftenauswertung. In den für dieses Dokument betrachteten Bussystemen ist schon protokollmäßig ein Übertragungscode (TC1) zur Erkennung von Bitfehlern am Bus vorgesehen. Bitfehler, die eine Verfälschung der Botschaftenpakete bewirken, fallen nach der Einteilung der IEC 61508-2 in das Fehlerbild Verfälschung. Für das Fehlerbild Maskerade wären Bitfehler am Bus nur dann ausschlaggebend, wenn sie beispielsweise bei CAN den Identifier betreffen, und der Übertragungscode des Protokolls diese nicht mit ausreichender Wahrscheinlichkeit erkennen würde.

Als grundlegende Voraussetzung für alle sicherheitsgerichteten Systeme im Fahrzeug gilt: Ein teilweiser oder kompletter Ausfall bzw. eine intermittierende oder dauerhafte Störung der Kommunikation darf zu keinem sicherheitsrelevanten Fahrzeugzustand führen.

Zur sicheren Erkennung von Übertragungsfehlern in der Kommunikation sind Anforderungen definiert. Den eigentlichen Nutzdaten des Senders sind dazu zusätzliche Informationen (Botschaftszähler, Checksumme) hinzugefügt. Diese werden im Empfänger ausgewertet. Die Absicherung erfolgt dabei End-to-End, d.h. von der sicherheitsgerichteten Software im Sendersteuergerät bis hin zur sicherheitsgerichteten Software im Empfängersteuergerät. Die von der Applikation generierten Datenpakete (Safety Protocol Data Units: S-PDUs) bestehen also aus Nutzdaten und Redundanz zur Fehlererkennung.

Bei Verwendung einer CRC-8 Checksumme ergibt sich eine maximale Anzahl von 256 Kennungen für die eindeutige Erkennung von Maskerade. Die Kennung 0 ist für jene Botschaften reserviert, die keine Absicherung gegen Maskerade erfordern. Damit verbleiben 255 ein-eindeutige Kennungen für die Vergabe an Botschaften die gegen Maskerade abzusichern sind, gleichbedeutend mit eben so vielen Sender/Empfänger-Strecken.

Im Fall von qualifizierten Fehlern im Empfänger werden die Nutzdaten bzw. Signale nicht an die sicherheitsgerichtete Software der Sicherheitsfunktion übergeben. Die Sicherheitsfunktionen sind so ausgelegt, dass im Fall von intermittierenden oder dauerhaften Störungen die Rückfallebene "Safe State Timeout" eingenommen wird. Fehler in den Signalen bzw. Nutzdaten, die bei der Auswertung unerkannt bleiben, können mitunter zum gefährlichen Vorfall führen, da die sicherheitsgerichtete Software die fehlerhaften Daten als gültig interpretiert und die Berechnungen bzw. Entscheidungen darauf aufbaut.

In der WO 2009/057941 A2 ist ein Verfahren für die Übertragung von Datenpaketen in einem 3GPP-Mobilfunknetzwerk beschrieben, bei dem einzelne Pakete chiffriert und mit einem Integritätswert kombiniert werden. Für die Chiffrierung wird ein Code verwendet, der sich mit jedem Datenpaket ändert. Der Code identifiziert aber auch eindeutig die Übertragungsstrecke. Hierzu setzt sich der Code aus einem Zählerwert und einem Id-Wert zusammen. Zusätzlich kann ein weiterer Chiffrierschlüssel zwischen den Geräten ausgetauscht werden. Der Code wird sowohl für die Chiffrierung als auch für die Integritätszahl verwendet.

In der US 2007/0192668 A1 ist eine Fernsteuerung für eine Lokomotive beschrieben, wobei die Fernsteuerung über eine drahtlose Kommunikationsverbindung mit der Lokomotive kommuniziert. Die übertragenen Datenpakete werden kodiert, wozu eine CRC-Information (Cyclic Redundancy Check) und eine Botschaftsidentifizierungsinformation, wie ein Botschaftszählerwert, zur Kodierung der Nachricht verwendet werden.

Davon ausgehend liegt der Erfindung die Aufgabe zugrunde bei Verwendung einer CRC-8 Checksumme für eine Anzahl von mehr als 255 Sender/Empfänger-Strecken eine Detektierung fehlgeleiteter Botschaften innerhalb des Fahrzeugnetzwerks zu ermöglichen. Dabei soll keine zusätzliche Busbandbreite für Absicherungsmechanismus erforderlich und Konformität hinsichtlich der Sicherheitsanforderungen an die Datenkommunikation aus den einschlägigen Sicherheitsnormen gewährleistet sein.

Diese Aufgabe wird durch die in den unabhängigen Patentansprüchen bezeichneten Erfindungen gelöst. Vorteilhafte Ausgestaltungen ergeben sich aus den abhängigen Ansprüchen.

Um einem Empfänger die Erkennung nicht-authentischer Botschaften (z.B. fehlgeleiteter Botschaften) zu ermöglichen sieht das Absicherungskonzept die Verwendung einer senderseitigen Kennung vor, wobei die Kennung in Abhängigkeit von einem Botschaftszähler (BSZ) dynamisch wechselt. Jeder Sender verwendet also eine Kennungssequenz. Diese Dynamik in der senderseitigen Kennung ermöglicht - bei gleichem Wertebereich für die Kennung (Abwärtskompatibilität zum Kennungskonzept nach dem Stand der Technik) - die Unterscheidung von mehr Sendern. Es ergibt sich so eine Erweiterung des Kennungsraums ohne zusätzliche Buslast. Zuvor wurden statische Ein-Byte Kennungen je Sender verwendet.

In einem Verfahren zum Übertragen einer Botschaft zwischen einem Sender und einem Empfänger mit einem Botschaftszähler und mit Mitteln zur Authentifizierung von Sender/Empfänger-Strecken weisen die Mittel zur Authentifizierung von Sender/Empfänger-Strecken Kennungssequenzen mit einer Mehrzahl von Kennungen auf und eine Kennung wird aus den Kennungssequenzen aufgrund des Botschaftszählers ausgewählt.

Es wird also vorzugsweise die bislang statische Ein-Byte Kennung aus einer Kennungssequenz aufgrund des Botschaftszähler-Wertes dynamisch ausgewählt.

Die Kennung wird bevorzugt zur Checksummen-Berechnung verwendet.

Zu jeder Sender-/Empfänger Strecke ist die zugehörige Kennungssequenz vorzugsweise im Sender und im Empfänger zu hinterlegen.

Weiter bevorzugt wird ein Botschaftszähler verwendet, der mehrere Werte in Form von Bits enthält, wobei zwei beliebige Kennungssequenzen zu maximal einem Wert des Botschaftszählers eine übereinstimmende Kennung aufweisen.

Darüber hinaus weist vorzugsweise eine Kennungssequenz zu allen Werten des Botschaftszählers (an allen bevorzugten 16 Positionen) unterschiedliche Kennungen auf.

Insbesondere wird eine Kennung für nicht-sicherheitsrelevante Botschaften verwendet und die Kennungssequenzen enthalten zu keinem Wert des Botschaftszählers die Kennung in Form des Kennungswertes für nicht sicherheitsrelevante Botschaften. Weiter bevorzugt ist die Kennung für nicht-sicherheitsrelevante Botschaften der Wert 0 und eine Kennungssequenz enthält zu keinem Wert des Botschaftszählers (in keiner der bevorzugt 16 Positionen) den Wert 0.

Ein Steuergerät und/oder ein Fahrzeug sind eingerichtet, eines der zuvor beschriebenen Verfahren auszuführen.

Zusammenfassend hat die Erfindung folgende Vorteile:
- Die dynamische Kennung ermöglicht bei unverändertem Wertebereich der Applikations-Checksumme die Absicherung von mehreren tausend

Botschaften im Netzwerkverbund.
- Es ist keine Änderung des Botschaftslayouts erforderlich.
- Demzufolge gibt es keine Erhöhung der Buslast.
- Das Absicherungskonzept erfüllt die Anforderungen hinsichtlich Datenkommunikation heutiger Sicherheitsnormen sowie der zukünftigen Automotive Norm ISO 26262.

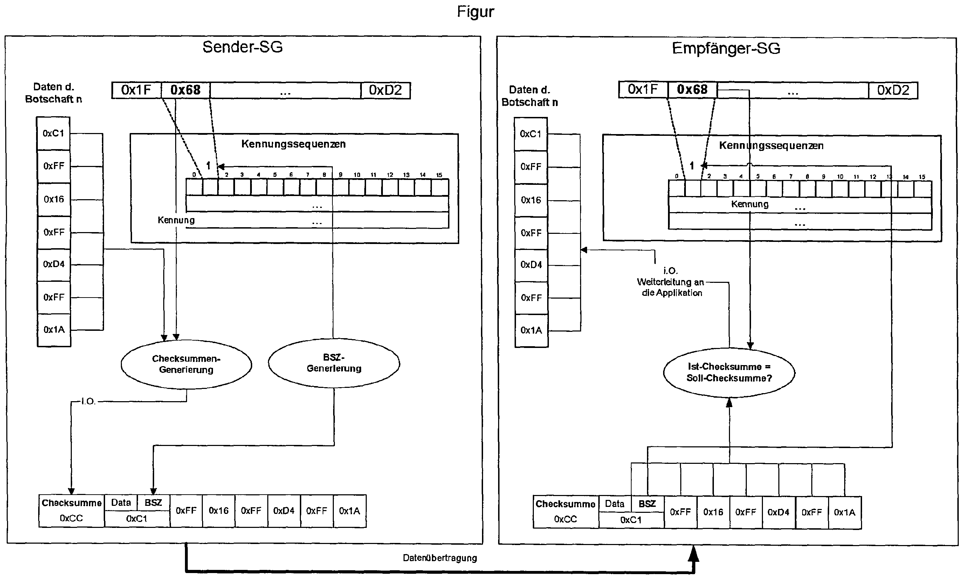

Weitere Merkmale und Vorteile der Erfindung ergeben sich aus der Beschreibung eines Ausführungsbeispiels anhand der Figur.

Zum Übertragen von Botschaften auf einem Bus, bereitet eine Applikation Nutzdaten aus konsistenten Signalen für den zyklischen Versand vor. Den Nutzdaten werden zur Absicherung gegen Übertragungsfehler ein Botschaftszähler (BSZ) sowie eine CRC-8 Checksumme angefügt. Die so generierte S-PDU wird anschließend von der Applikation an die Standardsoftware übergeben und für den Versand einem Communication Controller (CC) übergeben.

Im bestehenden Verfahren zur Absicherung gegen Maskerade wird sowohl im Sender als auch im Empfänger zur Berechnung der CRC-Checksumme nach den abzusichernden Nutzdaten eine statische und von der Sender/Empfänger-Strecke abhängige Botschaftskennung eingerechnet. Die Botschaftskennung wird aber nicht über den Bus versendet und ist somit nicht Bestandteil der abgesicherten Botschaft. Jedem Empfänger sind die Botschaftskennungen für alle zu empfangenden Botschaften a priori bekannt. Die korrekte Zuordnung Botschaftskennung zu Botschaft passiert netzwerkübergreifend und wird durch den Originalausrüstungshersteller sichergestellt.

Die Empfängerapplikation prüft zyklisch ob eine neue Botschaft vorhanden ist. Jede erhaltene Botschaft wird auf Plausibilität überprüft und nur im Fall gültiger Daten werden diese an die Applikation der Sicherheitsfunktion weitergeleitet. Die Plausibilisierung erfolgt durch Prüfung der CRC-Checksumme und Plausibilisierung des BSZ-Wertes. Ein BSZ-Wert gilt dann als gültig, wenn er sich gegenüber dem Zählerstand der zuletzt als gültig qualifizierten Botschaft um einen von der Zeitdifferenz abhängigen BSZ_{Delta}-Wert erhöht hat: Je länger der letzte als gültig qualifizierte Botschaftenempfang zurück liegt, um so größer darf die maximale Differenz zum aktuell erhaltenen BSZ sein. Das Intervall der erlaubten BSZ_{Delta}-Werte wird als BSZ-Gültigkeitsbereich bezeichnet. Botschaften mit BSZ außerhalb dieses BSZ-Gültigkeitsbereichs werden als nicht gültig gekennzeichnet. Ein Botschaftenempfang mit gleichem BSZ-Wert wie die zuletzt als gültig qualifizierte Botschaft, führt zu einer erkannten Wiederholung (BSZ_{Delta} = 0), die Botschaft wird als nicht gültig gekennzeichnet.

Das Verfahren der CRC-Berechnung und das Generatorpolynom sind für alle Botschaften im Netzwerkverbund gleich. Die eindeutige Berechnungsvorschrift ist im Lastenheft des Originalausrüstungsherstellers festgelegt. Zusätzlich zur CRC-Checksumme existieren aus bisherigen Absicherungsverfahren Botschaften mit einer XOR-Checksumme.. Die Botschaftskennung ist für jede sicherheitsrelevante Botschaft fest vorgegeben und ändert sich nicht mit der Zeit. Eine CRC-Checksumme mit x Bit hat einen Wertebereich von 2^{x}, demzufolge können maximal 2^{x} unterschiedliche Botschaftskennungen umkehrbar eindeutig in die CRC-Checksumme abgebildet werden. Unterschiedliche Kennungen führen dabei immer zu unterschiedlichen Werten der CRC. Diese Eigenschaft ist bei der konkreten Wahl des Generatorpolynoms garantiert. Für den Fall, dass die Botschaftskennung des Senders anders ist als die Botschaftskennung des Empfängers, sonst aber keine Bitfehler vorhanden sind, wird der Fehler zu 100% erkannt.

Daraus folgt eine maximale Anzahl von 256 Kennungen für die eindeutige Erkennung von Maskerade durch die ausgewählte CRC-8 Checksumme. Die Kennung 0 ist für jene Botschaften reserviert, die keine Absicherung gegen Maskerade erfordern. Damit verbleiben 255 ein-eindeutige Kennungen für die Vergabe an Botschaften die gegen Maskerade abzusichern sind, gleichbedeutend mit eben so vielen Sender/Empfänger-Strecken.

Beim ersten erkannten CRC-Fehler eines Klemme-15 Zyklus wird die empfangene Botschaft als nicht gültig gekennzeichnet und als Vorsichtsmaßnahme für unmittelbare Folgefehler die Rückfallebene "Safe State Timeout" eingenommen. Erst wenn eine bestimmte Anzahl von Botschaften innerhalb n Auswertezyklen als gültig qualifiziert sind, wird zum normalen Betriebszustand zurückgekehrt.

Die erste Botschaft dient zur Initialisierung des BSZ-Gültigkeitsbereichs und ist nicht gültig.

Beim zweiten erkannten CRC-Fehler innerhalb eines Klemme-15 Zyklus wird die Rückfallebene "Safe State Checksum" eingenommen und für den gesamten Klemme-15 Zyklus aufrechterhalten.

Eine Erweiterung auf mehr als 255 gegen Maskerade abgesicherte Sender/Empfänger-Strecken (S-PDUs) ist notwendig und Maskerade-Fehler sollen zuverlässig erkannt werden, so dass gefährliche Vorfälle aufgrund Maskerade den Grenzwert für den Sicherheits-Integritäts-Level 3 (SIL3) der Norm IEC-61508 nicht überschreiten.

Wegen geforderter Kompatibilität zu bereits in Serie befindlichen Steuergeräten soll der bereits vorhandene Sicherheitscode CRC-8, das Botschaftslayout und die bereits vergebenen statischen Botschaftskennungen erhalten bleiben. Die für Signale zur Verfügung stehende Bandbreite soll nicht geringer werden, d.h. eine Erweiterung auf eine CRC-12 bzw. CRC-16 ist nicht wünschenswert. Das neue Maskerade-Konzept soll eine Erweiterung der schon geleisteten Nachweise darstellen. Vorteile des neuen Konzepts zur Absicherung gegen Maskerade sind damit:
- erheblich größere Anzahl von abgesicherten Sender/Empfänger-Strecken,
- einfacher Prozess bei der Vergabe der Botschaftskennungen,
- der Grenzwert für SIL3 wird erfüllt,
- Erweiterung der bisher gebrachten Nachweise,
- Beibehaltung des Generatorpolynoms für die CRC-8 Checksumme,
- gleiche Bandbreite für Signale,
- unverändertes Botschaftslayout,
- Rückwärtskompatibilität zum bisherigen Konzept und
- Anwendbarkeit für asynchrone Sender und/oder Empfänger.

Die Figur stellt die Umsetzung einer Botschaftsabsicherung mit dynamischer Kennung im Sender dar.

Lediglich ein mit dem Sender konsistentes Verständnis über die einzuberechnende Botschaftskennung ist für die CRC-Auswertung im Empfänger wesentlich. Das neue Konzept sieht eine Kennungssequenz vor und baut auf der Anforderung an die Empfängerapplikation auf, dass mindestens zwei unerkannt fehlerhafte Botschaften für einen gefährlichen Vorfall notwendig sind.

Die bislang statische (zeitlich gleichbleibende) Kennung wird erweitert auf eine Kennungssequenz von 16 Kennungen. Die aus der Kennungssequenz zu verwendende Kennung wird aufgrund des BSZ-Wertes in der empfangenen Botschaft ausgewählt.

Für jede Sender/Empfänger-Strecke im Netzwerk wird eine aus N Kennungssequenzen für die Botschaften vergeben, eindeutig gekennzeichnet mit K_{idx} = {1, 2, ...,N}. Dabei besteht jede Kennungssequenz aus 16 Kennungen, in weiterer Folge für K_{idx} = i eindeutig bezeichnet mit k_{i,0}, k_{i,1}, ..., k_{i,15}.

Die vergebenen Kennungssequenzen erfüllen die Eigenschaften der folgenden notwendigen Bedingungen. Die Bedingungen 1 bis 5 betreffen dabei das Generieren der Kennungen, die Bedingungen 6 bis 8 hingegen den Vergabeprozess.

Bedingung 1: Die bisherigen statischen Botschaftskennungen entsprechen den Spezialfällen statischer Kennungssequenzen mit übereinstimmenden Werten an den 16 Positionen. Die Rückwärtskompatibilität zu den statischen Kennungen wird damit sichergestellt. Für K_{idx} = i ∈ {0, 1, ..., 255} gilt für jede statische Botschaftskennung kᵢ = i = k_{i,0} = ... = k_{i,15}.

Bedingung 2: Zwei beliebige Kennungssequenzen dürfen zu maximal einem BSZ-Wert (an maximal einer Position) eine übereinstimmende Kennung aufweisen.

Für K_{idx} = i, j ∈ {0, 1, ...,N}, i ≠ j und m, n ∈ {0, 1, ..., 15} mit m ≠ n gilt: Sofern k_{i,m} = k_{j,m} folgt k_{i,n} ≠ k_{j,n}.

Bedingung 3: Eine dynamische Kennungssequenz muss zu allen BSZ-Werten (an allen 16 Positionen) unterschiedliche Kennungen aufweisen.

Für K_{idx} = i ∈ {256, 257, ...,N} und m, n ∈ {0, 1, ..., 15} mit m ≠ n gilt: k_{i,m} ≠ k_{i,n}.

Bedingung 4: Eine dynamische Kennungssequenz darf zu keinem BSZ-Wert (in keiner der 16 Positionen) den Wert 0 enthalten.

Für K_{idx} = i ∈ {256, 257, ...,N} und m e {0, 1, ..., 15} gilt: k_{i,m} ≠ 0.

Bedingung 5: Die Liste der dynamischen Kennungssequenzen darf in ihrer Struktur keine für erwartete zufällige Hardwarefehler reproduzierbare Regelmäßigkeit aufweisen. Der Aufbau der Kennungstabelle soll einer Vergabe durch einen stochastischen Prozess ähnlich sein.

Keine Kennung darf mit signifikanter Häufung vorkommen. Zudem darf es keinen einfachen bzw. unmittelbar erkennbaren Zusammenhang zwischen den Kennungen innerhalb der Kennungssequenzen geben, d.h. nur ein "intelligenter Fehler" kann zu einer gültigen Kennungssequenz führen.

Diese Bedingung wird durch den Algorithmus zur Bestimmung der Kennungssequenzen gewährleistet.

Bedingung 6: Eine Kennungssequenz darf für eine bestimmte S-PDU-Länge nur dann vergeben werden, wenn bei gleich bleibenden Nutzdaten aber fortlaufendem BSZ die Kennungssequenz zu 16 CRC-Checksummen führt, die sich allesamt (beliebig paarweise) unterscheiden.

Für K_{idx} = i ∈ {0, 1, ...,N}, Botschaftszähler m, n ∈ {0, 1, ..., 15}, m ≠ n und r ∈ {1, ..., 40} gilt: CRC(m, db₂, ..., dbᵣ, k_{i,m}) ≠ CRC(n, db₂, ..., dbᵣ, k_{i,n}).

Dabei bezeichnet CRC(·) die Funktion zum Berechnen der CRC-8 Checksumme der Datenbytes db₁ = m bis dbᵣ.

Bedingung 7: Eine dynamische Kennungssequenz darf für eine bestimmte S-PDU-Länge nur dann vergeben werden, wenn bei beliebigen gleich bleibenden Nutzdaten aber fortlaufendem BSZ die Kennungssequenz zu 16 CRC-Checksummen führt, die an maximal einer Position (also für einen BSZ-Wert) eine Übereinstimmung mit den 16 XOR-Checksummen aufweisen.

Für K_{idx} = i ∈ {256, 257, ...,N},m, n e {0, 1, ..., 15}, m ≠ n und r ∈ {1, ..., 40} gilt:
Sofern CRC(m, db₂, ..., dbᵣ, k_{i,m}) = XOR(m, db₂, ..., dbᵣ, k_{XOR}) folgt CRC(n, db₂, ..., dbᵣ, k_{i,n}) ≠ XOR(n, db₂, ..., dbᵣ, k_{XOR}).

Dabei bezeichnet CRC(·) die Funktion zum Berechnen der CRC-8 Checksumme, XOR(·) die Funktion zum Berechnen der XOR-Checksumme und k_{XOR} eine beliebige statische Kennung der XOR Checksumme.

Bedingung 8: Jede Kennungssequenz darf für eine bestimmte S-PDU-Länge nur einmal vergeben werden. Eine Ausnahme bildet die statische Kennung 0, die für nicht-sicherheitsrelevante Botschaften mehrfach vergeben werden darf.

## Patentansprüche

1. Verfahren zum Übertragen einer Botschaft zwischen einem Sender und einem Empfänger mit Mitteln zur Authentifizierung von Sender/Empfänger-Strecken und mit einem Botschaftszähler (BSZ), wobei eine senderseitige Kennung zur Checksummen-Berechnung verwendet wird,
**dadurch gekennzeichnet, dass**
- die Mittel zur Authentifizierung von Sender/Empfänger-Strecken Kennungssequenzen mit einer Mehrzahl von Kennungen aufweisen und
- durch den Sender eine der Kennungssequenzen verwendet und die zur Checksummen-Berechnung verwendete Kennung aus der Kennungssequenz aufgrund des Botschaftszähler-Wertes dynamisch ausgewählt wird.

2. Verfahren nach den Anspruch 1,
**dadurch gekennzeichnet, dass**
die Kennungssequenzen dem Sender und dem Empfänger verfügbar sind.

3. Verfahren nach einem der vorhergehenden Ansprüche,
**dadurch gekennzeichnet, dass**
ein aus mehreren Bits bestehender Botschaftszähler (BSZ) verwendet wird.

4. Verfahren nach den Anspruch 3,
**dadurch gekennzeichnet, dass**
zwei beliebige Kennungssequenzen zu maximal einem Wert des Botschaftszählers (BSZ) eine übereinstimmende Kennung aufweisen.

5. Verfahren nach einem der Ansprüche 3 oder 4,
**dadurch gekennzeichnet, dass**
eine Kennungssequenz zu allen Werten des Botschaftszählers (BSZ) unterschiedliche Kennungen aufweist.

6. Verfahren nach einem der Ansprüche 3 bis 5,
**dadurch gekennzeichnet, dass**
eine Kennung für nicht-sicherheitsrelevante Botschaften verwendet wird und dass die Kennungssequenzen zu keinem Wert des Botschaftszählers (BSZ) die Kennung für nicht sicherheitsrelevante Botschaften enthalten.

7. Steuergerät, das eingerichtet ist, ein Verfahren nach einem der Ansprüche 1 bis 6 auszuführen.

8. Fahrzeug, das einen Kommunikationsbus aufweist, der eingerichtet ist, ein Verfahren nach einem der Ansprüche 1 bis 6 auszuführen.

## Claims

1. Method for transmitting a message between a sender and a receiver having means for authentication of sender/receiver paths and having a message counter (BSZ), wherein a sender-side identification is used for checksum calculation,
**characterised in that**
- the means for authentication of sender/receiver paths have identifier sequences with a plurality of identifiers and
- one of the identifier sequences is used by the sender and the identifier used for checksum calculation is selected from the identification sequence dynamically based on the message counter value.

2. Method according to claim 1,
**characterised in that**
the identifier sequences are available to the sender and the receiver.

3. Method according to any of the preceding claims,
**characterised in that**
a message counter (BSZ) comprising a plurality of bits is used.

4. Method according to claim 3,
**characterised in that**
any two identifier sequences with respect to a maximum of a value of the message counter (BSZ) have a corresponding identifier.

5. Method according to any of claims 3 or 4,
**characterised in that**
an identifier sequence with respect to all values of the message counter (BSZ) has different identifiers.

6. Method according to any one of claims 3 to 5,
**characterised in that**
an identifier for non-safety-relevant messages is used and **in that** the identifier sequences with respect to no value of the message counter (BSZ) contain the identifier for non-safety-relevant messages.

7. Control device which is configured to carry out a method according to any one of claims 1 to 6.

8. Vehicle which has a communication bus which is configured to carry out a method according to any one of claims 1 to 6.

## Revendications

1. Procédé de transmission d'un message entre un émetteur et un récepteur avec des moyens destinés à l'authentification de trajets émetteur/récepteur et avec un compteur de messages (BSZ), dans lequel un identificateur côté émetteur est utilisé pour le calcul de somme de contrôle,
**caractérisé en ce que**
- les moyens destinés à l'authentification de trajets émetteur/récepteur comportent des séquences d'identificateurs avec une multiplicité d'identificateurs et
- une des séquences d'identificateurs est utilisée par l'émetteur et l'identificateur utilisé pour le calcul de somme de contrôle est choisi dynamiquement dans la séquence d'identificateurs sur la base de la valeur du compteur de messages.

2. Procédé selon la revendication 1, **caractérisé en ce que** les séquences d'identificateurs sont mises à la disposition de l'émetteur et du récepteur.

3. Procédé selon l'une quelconque des revendications précédentes, **caractérisé en ce qu'**un compteur de messages (BSZ) constitué de plusieurs bits est utilisé.

4. Procédé selon la revendication 3, **caractérisé en ce que**, pour au maximum une valeur du compteur de messages (BSZ), deux séquences d'identificateurs quelconques comportent un identificateur coïncident.

5. Procédé selon l'une quelconque des revendications 3 ou 4, **caractérisé en ce que**, pour toutes les valeurs du compteur de messages (BSZ), une séquence d'identificateurs comporte des identificateurs différents.

6. Procédé selon l'une quelconque des revendications 3 à 5, **caractérisé en ce qu'**un identificateur est utilisé pour des messages non relatifs à la sécurité et **en ce que**, pour aucune valeur du compteur de messages (BSZ), les séquences d'identificateurs contiennent l'identificateur pour messages non relatifs à la sécurité.

7. Appareil de commande qui est conçu pour mettre en oeuvre un procédé selon l'une quelconque des revendications 1 à 6.

8. Véhicule qui comporte un bus de communication qui est conçu pour mettre en oeuvre un procédé selon l'une quelconque des revendications 1 à 6.
